# EUROPEAN PATENT APPLICATION

(11) **EP 2 527 975 A1**
(43) Date of publication of application: **28.11.2012**
(21) Application number: 12168777.6
(22) Date of filing: 21.05.2012
(51) Int. Cl.: G06F 9/44

(54) **Set-up of a thin client computer**

(30) Priority: 23.05.2011 US 201161489237 P
(71) Applicant: Devon IT, Inc., King of Prussia, PA 19406 (US)
(72) Inventor: Geiser, Ian, West Chester PA 19380 (US)
(74) Representative: Messulam, Alec Moses

(57) **Abstract**

A method of booting a thin client computer does not require a technician to load an operating system and otherwise configure the thin client computer to permit operation thereof. The thin client computer is pre-loaded with a boot sequence in the read only memory that requires only that a kernel stored in the read only memory be activated. The kernel directs the thin client computer to a domain name server that provides the internet address of a file server from which the requisite operating system is obtained. After installation of the operating system, the domain name server is contacted to provide the address at which the thin client computer obtains application software and data storage capabilities from a remote server to complete the set-up of the thin client computer for operation. The remote server establishes a network application or remote virtual desktop for the operation of the thin client computer.

## Description

### FIELD OF THE INVENTION

The present invention relates generally to the operation of thin client computers, and, more particularly, to a method of booting thin client computers without requiring prior configuration thereof.

### BACKGROUND OF THE INVENTION

The Internet has brought many advantages in communications to its users, but has also brought substantial security concerns along with those advantages. Hackers gain access to private records of individuals and of corporations and governmental agencies through their connection to the Internet. Identity theft has become a buzzword for a major crime in which a person's secret account numbers, access codes, social security numbers, and other related information are stolen from a person and used to charge purchases, transfer funds, etc. from the person rightfully entitled thereto. Such theft is usually the result of a theft of the information from an owner's computer. Each transaction in which secret information of the owner is transmitted to a third party becomes subject to invasion by a hacker. Once a hacker has access into a person's computer, the electronic files in conventional Windows programs wherein account numbers and passwords are located are easily identified and opened.

Personal computers are typically loaded with an operating system, such as the Windows® operating system, from which is run application programs such as spread sheets, word processing and accounting programs that often contain sensitive and proprietary information. Typically viruses, Trojan horses, rootkits and other malicious programs that might contaminate a personal computer are based on the Windows® operating system and require a computer utilizing Windows® software to propagate and to operate.

Corporate computer departments typically have servers centrally located with a plurality of personal computers connected to the servers through a network. These corporate servers allow access to the Internet and also typically include a domain name server. Thin client computers have been developed to have a limited operating system that permits the thin client computer to be connected to a file server to receive application software and data without the ability to save data on a hard drive within the thin client computer system. Conventional thin client computers require a set-up configuration in order to be operated. This set-up procedure requires a technician to install in the limited operating system the protocol for accessing the remote server containing the software and the data storage capability. Furthermore, when operating system upgrades are needed, each individual conventional thin client computer must be updated as the operating system for the computer is installed in the initial set-up of the thin client computer.

It would be desirable to provide a zero configuration thin client computer which is capable of self-configuring when first booted up so that prior set-up by a technician is not required before the thin client computer can be operated.

### SUMMARY OF THE INVENTION

According to a first aspect of the invention, there is provided a method of booting a thin client computer as hereinafter set forth in Claim 1 of the appended claims.

According to a second aspect of the invention, there is provided a computer system comprising at least one thin client computer, a domain name server and a file server as hereinafter set forth in Claim 9 of the appended claims.

### BRIEF DESCRIPTION OF THE DRAWING

The foregoing and other objects, features, and advantages of the invention will appear more fully hereinafter from a consideration of the detailed description that follows, in conjunction with the accompanying sheets of drawings. It is to be expressly understood, however, that the drawings are for illustrative purposes and are not to be construed as defining the limits of the invention.

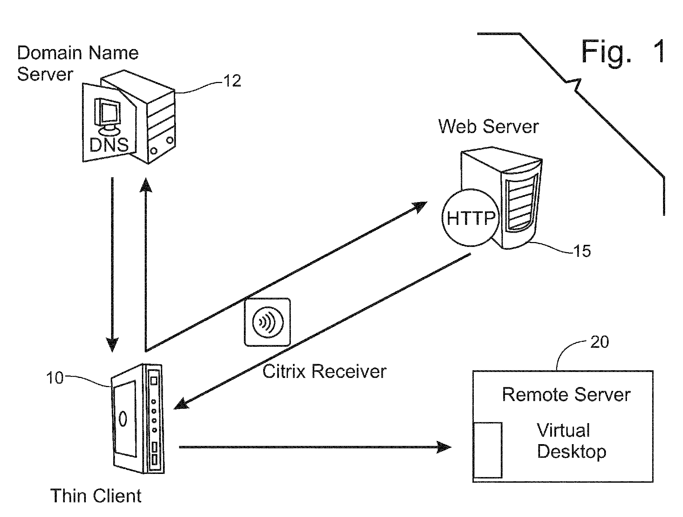

Fig. 1 is a schematic diagram of a zero configuration architecture for a thin client computer; and

Fig. 2 is a logic flow diagram of the zero configuration boot sequence.

### DETAILED DESCRIPTION OF THE PREFERRED EMBODIMENT

Referring to the drawings, architecture for a zero configuration thin client computer can best be seen. The architecture includes the thin client computer 10, a domain name server 12, and an internet server 15 from which the network application or virtual desktop 20 can be created without prior set-up configuration of the thin client computer 10, as will be described in greater detail below.

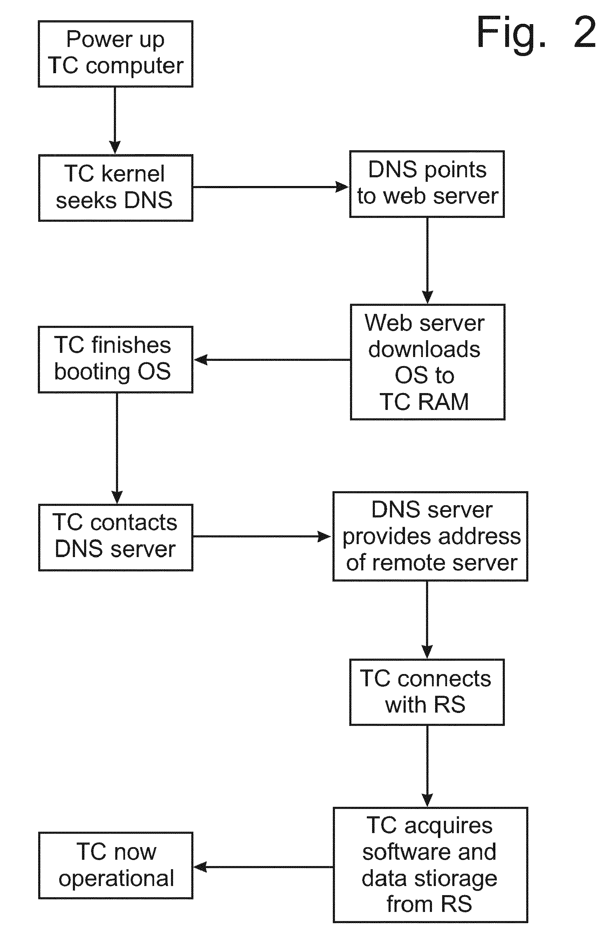

The internet (in this case http) server 15 can be a separate remote server in the corporate environment, but is more typically supported on a file server 12. The thin client computer 10 is initially configured with a minimal operating system, meaning an operating system that can be turned on and activate a kernel that is configured only to seek out the domain name server 12. As is reflected in the logic flow diagram of Fig. 2, the domain name server 12 provides the thin client computer 10 with the address of the file server 15 which then downloads the full operating system into the random access memory (RAM) of the thin client computer 10. Once the full operating system is received from the file server 15, the thin client computer 10 can finish the boot sequence to make the thin client computer 10 operational.

Once completely booted, the thin client computer 10 will again contact the domain name server 12 to obtain the address of the remote server 20 on which the application software needed to operate the thin client computer 10 is stored and made available to the thin client computer 10, along with data storage capability as the thin client computer 10 has no data storage ability itself. At this point in time, the thin client computer 10 is full operational and operates a network application or virtual desktop on the remote server 20.

For this zero configuration process to be effective, the initial set-up of the domain name server 12 must contain the appropriate information and configuration for a zero configuration thin client computer 10 and be able to direct the thin client computer 10 to the proper file server 15 and ultimately to the proper remote server 20. To accomplish this direction of the thin client computer 10, the domain name server 12 would be configured to have a zone of "_ditzc" at the top level of the desired domain that will have the zero configuration feature enabled. Further, the domain name server 12 would be configured to have a zone of "_image" inside of the "_ditzc" zone. Inside this "_image" zone, the following text (TXT) records would be added:
(1) _host - The host address of the server that contains the operating system image.
(2) _path - The absolute path to the operating system image on the server.
(3) _proto - The protocol used to access the server that contains the operating system image.
(4) _port - The port used to access the server that contains the operating system image.

The protocol can be one of the following:
(a) http - The hypertext transport protocol.
(b) ftp - The file transport protocol.
(c) iscsi - The IP based SCSI transport protocol.
(d) nfs - The network file system protocol.
(e) cifs - The common internet file system protocol.
   The domain name server 12 is configured to have a TXT record of "_session" inside of the "_ditzc" zone of the desired domain that will have zero configuration available. The operating system image is a compressed partition image with the squashfs format and placed on a public HTTP share. A DHCP (dynamic host configuration protocol) server on the local domain must be configured to provide an IPv4 address to the thin client computer 10.

With the network system provided with this configuration, the thin client computer 10 is ready to boot up immediately when taken out of the shipping packaging and plugged into an electrical power supply. The thin client computer 10 immediately starts the boot sequence with the limited operating system installed on the read-only memory (ROM) within the thin client computer 10. Included in the ROM is a kernel that boots off of the thin client computer flash. The kernel in the thin client computer 10 seeks out the domain name server 12 and through an initramfs file requests the domain name server 12 to provide the text (TXT) records for "_host", "_path", "_proto", and "_port" from the "_ditzc" zone in the first domain returned by a Linux libc resolver.

The URI to the main operating system image URI is then assembled from the data returned by the text (TXT) records obtained from the domain name server 12. The initramfs file downloads the main operating system disk image from the assembled URI into the random access memory (RAM) of the thin client computer 10. The initramfs read-only mounts the main operating system disk image on a temporary mount point via a loopback device and then creates a read-write RAM overlay and mounts the overlay to a temporary mount point. The initramfs files uses aufs to merge the RAM overlay mount point and the operating system disk image mount point into a common root mount point. The initramfs file then executes a run-init command on the aufs root mount point.

The new init file then executes the debian live-config configuration scripts to prepare the system for running properly on the aufs root. The init scripts then execute the remainder of the sysv init scripts for the operating system image. The last init script executed is the nodm daemon to start the Xorg display session, which executes the scripts in /etc/X11/Xsession.d in alphanumeric order. The last script in the /etc/X11/Xsession.d starts the session login screen. The session login screen will pause until there is a valid network connection.

The login screen application will then request a DNS TXT record "_session" inside of the "_ditzc" zone from the first domain returned by the Linux libc resolver. This DNS TXT record will be referred to as the session record. This DNS TXT record format is a key-value pair with one setting per line in the DNS TXT record. The key-value pair is delimited by the first "=" sign encountered. The key can only contain alpha-numeric characters as well as the "_" character. The value can contain any characters, and is terminated by the line delimiter in the DNS TXT record. From here on these key-value pairs will be referred to as a connection setting. Where the name of the connection setting is the key in the key-value pair, and the value is the value of the key-value pair.

The remote session type is extracted from the PROTO connection setting in the session record. The value of "rdp" in the PROTO connection setting defines the session type of Microsoft's Remote Desktop Protocol. The connection settings of RDP_SERVER and RDP_PORT are extracted from the session record. The value of "ica" in the PROTO connection setting defines the session type Citrix's ICA protocol. The connection setting of PNA_URL is extracted from the session record. The value of "http" in the PROTO connection setting defines a session where a web browser is used. The connection setting of URL is extracted from the session record. The session login screen will then display a window that allows the user to enter only their username and password at which time the thin client computer 10 will use that information to connect to the network application or virtual desktop session on the remote server 20. As an option, *DomainName\UserName* formats are supported to populate the domain option of the client session. The local window is then hidden for the duration of the remote session. When the remote session ends the user is presented with the login screen again.

The zero configuration connection of the thin client computer 10 can be accomplished through different connection type configurations, including Microsoft's remote desktop protocol, a remote Citrix receiver, or a web-based HTTP connection.

For a remote thin client computer 10 session using a remote desktop protocol, any client application that can support the remote desktop protocol can be used that is supported by the local operating system so long as the local operating system provides the options to configure the server address as well as the port. In addition, the remote desktop protocol application must also support full-screen mode. The remote desktop protocol application is to be configured with the user credentials collected from the session login screen. If there is a "/" in the username field then the domain is separated as the text left of the "/" and the username is the text right of the "/". The remote desktop protocol application is then configured to connect to the server as defined by the session setting RDP_SERVER on the port as defined by the session setting RDP_PORT. The remote desktop protocol application is then executed in a full screen mode.

For a remote session of type ICA (Independent Computing Architecture, a protocol developed by the Citrix Corporation), the ICA support is provided by the Citrix pnabrowse application supplied by the default Linux client installer from Citrix. The pnabrowse application is provided with the user credentials collected from the session login screen. If there is a "/" in the username field then the domain is separated as the text left of the "/" and the username is the text right of the "/". The pnabrowse application is executed with the PNA_URL session setting is used to retrieve the list of available remote sessions. If only one session is available, the pnabrowse application is executed with that specific session name returned by the prior command. If more than one session is available, the login screen is hidden. A list of available sessions that were returned by the prior command is listed in a new window. The user then selects the desired session from the list. The pnabrowse application is then executed with the selected session name.

For a remote session of type HTTP, the HTTP browser must have the following configuration options: (a) Full screen kiosk mode with ability to hide items like book marks and browser settings in the UI; and (b) Open a page on start with a URL that contains the username and password. The URL supplied by the URL session setting will have the username and password injected into it. This modified URL will then be passed to the browser application as it starts.

This zero configuration process for a thin client computer 10 provides a method of starting the operation of the thin client computer 10 without requiring an initial set-up procedure by a technician. Thus, this method of starting the operation of a thin client computer 10 allows IT administrators to be able to deploy large numbers of thin client computers without needing to physically configure any one of the thin client computers 10 before being initially operated. As a result, the thin client computer 10 can literally be connected to a network application or virtual desktop immediately upon being removed from the shipment packaging and connected to an electrical power supply and network.

As an added benefit, since the thin client computer 10 obtains the operating system from a remote server during the boot-up sequence, any upgrades that are needed for the operating system can be applied to the software on the remote server without regard to each of the thin client computers 10 that will be needing that upgrade. Then, when the thin client computers 10 download the operating system from the remote server 15 during the next boot-up of the thin client computer 10, the upgrades will automatically be downloaded. Accordingly, this method of operating a thin client computer allows IT administrators to distribute operating system upgrades without needing to touch the thin client computer 10 or to send a technician to install the upgrades on the thin client computer 10.

It will be seen from the foregoing description that embodiments of the invention provide a method by which a thin client computer can be operated without advance configuration. The thin client computer needs only be powered to be able to operate as intended. The thin client computer is pre-loaded only with a boot sequence that requires activation of a kernel stored in the read only memory.

It is an advantage of the preferred embodiments of the invention that the thin client computer requires only the services of a technician to plug the computer into a power source and to attach the necessary peripherals.

## Claims

1. A method of booting a thin client computer having a read only memory and a random access memory, comprising the steps of:
powering the thin client computer having only a kernel loaded from said read only memory into the random access memory, said kernel being configured to seek a specified domain name server;
activating said kernel to contact said domain name server;
providing the thin client computer with an address of a file server from said domain name server; and
then, contacting said file server to download a full operating system into said random access memory of said thin client computer to allow said thin client computer to finish a boot sequence.

2. A method as claimed in Claim 1 further comprising the steps of:
after said thin client computer has finished said boot sequence and said operating system is operational, re-directing said thin client computer to said domain name server;
acquiring from said domain name server an address of a remote server having remote application software available for access of said thin client computer; and
establishing a connection to a network application or virtual desktop with said remote server for operation at said thin client computer.

3. A method as claimed in Claim 2 further comprising the steps of:
using said remote server for data storage from the operation of said operating system and application software.

4. A method as claimed in Claim 3 wherein said domain name server and said file server are supported on a common file server.

5. A method as claimed in Claim 4 wherein said domain name server has stored thereon identification information and configuration for said thin client computer and the address of the proper file server for the identified thin client computer.

6. A method as claimed in Claim 5 wherein said domain name server is configured to provide to the identified thin client computer information including:
the host address of said file server that contains an operating system image for the identified thin client computer;
the absolute path to the operating system image on the file server;
a protocol used to access the file server that contains the operating system image for the thin computer; and
the port used to access the file server containing the operating system image for the thin client computer.

7. A method as claimed in Claim 6 wherein the protocol on the domain name server included:
a hyper-text transport protocol;
an IP based SCSI transport protocol;
a network file system protocol; and
a common internet file system protocol.

8. A method as claimed in Claim 7 wherein said thin client computer has the boot sequence stored in the read only memory, said boot sequence requires only that said kernel be loaded into random access memory and activated.

9. A computer system comprising at least one thin client computer, a domain name server and a file server, the thin client computer having a read only memory and a random access memory, there being stored in the read only memory of the thin client a kernel and a boot sequence requiring only that said kernel be activated; wherein initiation of operation of the thin client is effected by the steps of :
powering said thin client computer to start said boot sequence;
loading said kernel from read only memory into random access memory;
activating said kernel to contact a domain name server;
supplying said thin client computer from said domain name server an address for a file server; and
contacting said file server and downloaded from said file into the random access memory of said thin client an operating system including direction to contact a remote server for application software and data storage capabilities.

10. A system as claimed in Claim 9 further comprising the steps of:
establishing on said remote server a network application or virtual desktop for operation of said application software.

11. A system as claimed in Claim 10 wherein said domain name server has stored thereon identification information and configuration for said thin client computer and the address of the proper file server for the identified thin client computer.

12. A system as claimed in Claim 11 wherein said domain name server is configured to provide to the identified thin client computer information including:
the host address of said file server that contains an operating system image for the identified thin client computer;
the absolute path to the operating system image on the file server;
a protocol used to access the file server that contains the operating system image for the thin computer; and
the port used to access the file server containing the operating system image for the thin client computer.

13. A system as claimed in Claim 12 wherein the protocol on the domain name server included:
a hyper-text transport protocol;
an IP based SCSI transport protocol;
a network file system protocol; and
a common internet file system protocol.

14. A system as claimed in Claim 13 wherein said thin client computer has the boot sequence stored in the read only memory, said boot sequence requires only that said kernel be loaded into random access memory and activated.
